Europäisches Patentamt

(19) **European Patent Office** (11) Numéro de publication: **0 097 549**

Office européen des brevets **B1**

(12) **FASCICULE DE BREVET EUROPEEN**

(45) Date de publication du fascicule du brevet:
**27.08.86**

(21) Numéro de dépôt: **83401074.6**

(22) Date de dépôt: **27.05.83**

(51) Int. Cl.⁴: **H 02 K 5/132**, H 02 K 5/124,
H 02 K 9/19, F 04 D 13/06,
F 16 J 15/40

(54) Dispositif pour réaliser l'étanchéite d'un moteur immergeable et moteur s'y rapportant.

(30) Priorité: **04.06.82 FR 8209746**

(43) Date de publication de la demande:
**04.01.84 Bulletin 84/1**

(45) Mention de la délivrance du brevet:
**27.08.86 Bulletin 86/35**

(84) Etats contractants désignés:
**DE GB IT NL**

(56) Documents cités:
**FR - A - 1 432 842**
**FR - A - 2 098 196**
**FR - A - 2 105 902**
**US - A - 2 002 915**
**US - A - 2 002 916**
**US - A - 2 568 548**

(73) Titulaire: **MOTEURS LEROY-SOMER Société dite:,**
**Boulevard Marcellin Leroy, F-16000 Angouleme (FR)**

(72) Inventeur: **Arnaudeau, Marcel, 32, rue Boursault,**
**F-75017 Paris (FR)**
Inventeur: **Morin, Pierre, 113, rue Danton,**
**F-92300 Levallois-Perret (FR)**
Inventeur: **Fouin, Jean, 33, Résidence du Jardin Vert,**
**F-16000 Angouleme (FR)**
Inventeur: **Galais, Michel, 2, allée Jules Védrines Cité**
**Saint-Exupéry, F-16000 Angouleme (FR)**
Inventeur: **Sardain, Christian, 42, Impasse Gaston**
**Grelat, F-90100 Delle (FR)**

(74) Mandataire: **Bouju, André et al, Cabinet Bouju 38 avenue**
**de la Grande Armée, F-75017 Paris (FR)**

ACTORUM AG

## Description

La présente invention concerne un dispositif pour réaliser l'étanchéité d'un moteur immergeable.

L'invention concerne également un moteur utilisant ce dispositif, destiné à fonctionner en immersion totale et permanente, notamment pour l'entraînement de pompes en puits forés.

Un tel moteur électrique est logé dans une enceinte cylindrique et généralement accouplé à une pompe axiale. Cette enceinte comprend, pour la sortie d'arbre du moteur, une garniture tournante, dont une pièce est solidaire de l'arbre, l'autre étant solidaire de l'enceinte.

L'enceinte est remplie d'une huile prévue notamment pour assurer la lubrification des paliers du moteur et le refroidissement des enroulements, et pour homogénéiser la température. Il est prévu, dans certains types de moteurs, d'assurer une circulation de cette huile au moyen d'un pompage.

Le moteur peut comporter une réserve d'huile contenue dans un réservoir à volume variable en contact avec le milieu extérieur, de manière à réaliser une «équipression» entre l'intérieur et l'extérieur de l'enceinte.

Cependant, le fonctionnement en équipression est en général incompatible avec la bonne tenue de la garniture tournante. Le liquide pompé contient en effet toujours des impuretés minérales qui peuvent s'introduire entre les deux parties coopérantes de la garniture et provoquer sa destruction rapide.

On a tenté de résoudre ce problème en établissant une surpression d'huile contenue dans le moteur sur la garniture, de manière à ménager une fuite d'huile vers l'extérieur du moteur en balayant les impuretés. Cette surpression peut être obtenue au moyen d'un piston actionné par un ressort, la course du piston définissant la durée d'utilisation du groupe. L'inconvénient de cette solution est de faire apparaître, au début du fonctionnement, une surpression importante, qui provoque un important débit de fuite. De plus, les variations de température du fluide moteur (qui sont importantes lors des arrêts du groupe de pompage) provoquent des variations de volume entraînant un mouvement de va-et-vient du piston. L'étanchéité entre le piston et son enveloppe est peu à peu détruite par suite de la corrosion du système en contact avec le liquide pompé. En outre, les durées d'utilisation ainsi obtenues sont notablement diminuées.

On a également envisagé de maintenir le boitier étanche sensiblement en équipression avec le milieu extérieur et de créer une surpression locale au niveau d'une garniture tournante entourant l'extrémité de sortie de l'arbre moteur. En particulier, le document US-A- 2 002 916 décrit un dispositif d'étanchéité de ce type. Toutefois, d'après l'enseignement de ce document, la surpression au voisinage de la garniture tournante est créée par une roue de pompage centrifuge relativement éloignée de la garniture tournante. La surpression au niveau de la garniture tournante va donc être très sensible à la vitesse de rotation du moteur.

La présente invention vise à réaliser un dispositif d'étanchéité pour un moteur dans lequel la garniture tournante soit préservée par l'application d'une surpression sensiblement constante dans des conditions optimales.

Ce résultat est obtenu, suivant l'invention, en prévoyant un dispositif pour assurer l'étanchéité d'un moteur immergé dans un milieu extérieur, ce moteur comprenant une enceinte, un arbre ayant une extrémité de sortie s'étendant à travers une extrémité de l'enceinte, cet arbre supportant au moins un rotor adapté à coopérer avec un stator solidaire de l'enceinte, l'enceinte comportant une garniture tournante pour l'extrémité de sortie de l'arbre, l'enceinte étant remplie avec un liquide de lubrification et de refroidissement sous pression et comportant des moyens étanches pour maintenir la pression générale dans l'enceinte à une valeur sensiblement égale à celle du milieu extérieur, ce dispositif comportant un premier circuit créant une surpression dans une zone adjacente à la garniture tournante caractérisé en ce qu'il comporte un second circuit pour créer une surpression additionnelle dans cette zone.

Ainsi, le second circuit de surpression réalisé, par un faible écart de pression supplémentaire, une surpression totale régulière et importante par rapport à la pression générale dans l'enceinte. De plus, la réalisation d'un dispositif à deux circuits permet de séparer les fonctions de lubrification et de refroidissement interne du moteur électrique d'une part qui nécessitent un débit notable et d'autre part la fonction de pressurisation de la garniture qui nécessite une surpression élevée mais un débit faible. Ainsi au voisinage de la garniture, du fait du faible débit, se trouvent réduits au minimum les effets de turbulence et oscillations de pression associées provoquant une augmentation de la fuite vers l'extérieur.

Selon une version avantageuse, le dispositif comporte un disque de butée calé sur l'arbre adapté pour assurer à la fois le positionnement axial de l'arbre moteur et former le premier et le second circuit par des canaux radiaux percés dans l'épaisseur de l'arbre, une première série de ces canaux constituant le premier circuit, faisant communiquer un canal coaxial à l'arbre avec un espace périphérique en relation avec les deux circuits, et une seconde série de canaux formant le second circuit et constituant des moyens de circulation de ce second circuit.

Ce disque remplissant tout à la fois les trois fonctions (butée, pompe du premier circuit, pompe du second circuit) est particulièrement compact et réduit encore l'encombrement longitudinal du moteur.

D'une manière intéressante, le moteur comporte des moyens pour que le liquide protecteur circulant dans les canaux assure le refroidissement du disque de butée utilisé comme système de pompage.

Cette disposition permet de refroidir la butée sans avoir à prévoir un circuit supplémentaire, puisque l'huile circule à l'intérieur de canaux ménagés dans cette butée; son refroidissement est ainsi particulièrement efficace.

Il est avantageux de prévoir à l'extérieur de l'enceinte, et à proximité immédiate de la garniture d'étanchéité de l'arbre, une pièce de protection calée sur l'arbre du côté extérieur de la garniture mécanique tournant par rapport à l'enceinte, cette pièce de protection présentant un rebord périphérique s'étendant au voisinage de l'enceinte pour constituer, avec cette enceinte, un joint labyrinthe à effet centrifuge.

Cette disposition permet d'éliminer la majeure partie des impuretés pouvant avoisiner l'extérieur de la garniture d'une part par l'effet de chasse centrifuge qu'elle permet et d'autre part du fait que la fuite de la garniture lave le volume compris entre cette garniture et cette pièce de protection.

D'autres particularités et avantages de l'invention ressortiront encore de la description détaillée qui va suivre.

Aux dessins annexés, donnés à titre d'exemples non limitatifs:

– la fig. 1 est une vue longitudinale tronquée, avec demi-coupe, du moteur et du raccordement étanche avec la pompe;

– la figure 2 est une vue en coupe agrandie de la zone du raccordement étanche, suivant II–II de la figure 3;

– la figure 3 est une vue en coupe transversale suivant III–III de la figure 2.

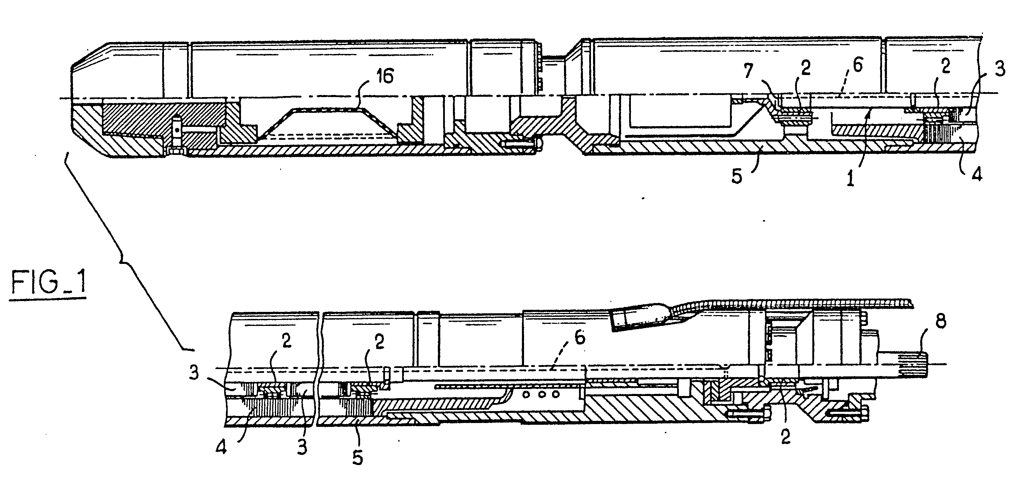

En référence à la figure 1, le moteur de la motopompe comprend un arbre 1 porté par un certain nombre de paliers 2, sur lequel sont calés un certain nombre de rotors 3 coopérant avec un stator solidaire d'une enceinte 5.

L'arbre 1 est forcé sur presque toute sa longueur d'un canal axial 6 qui débouche à l'extrémité 7 de l'arbre opposée à l'extrémité 8 qui s'accouple à l'arbre de la pompe (non représenté).

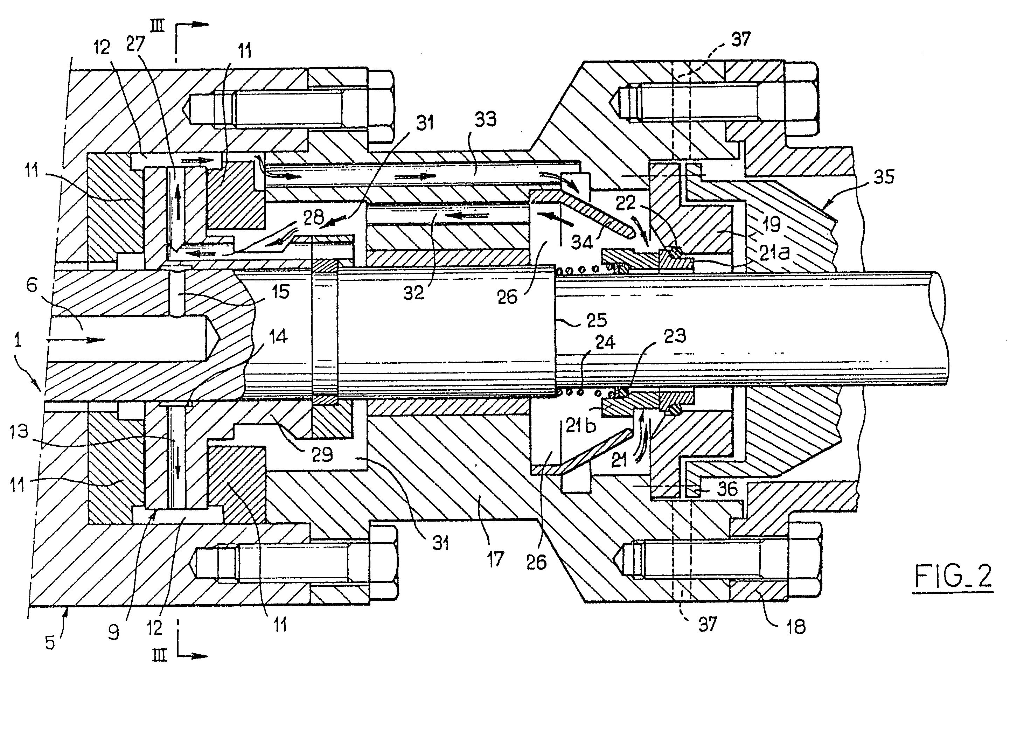

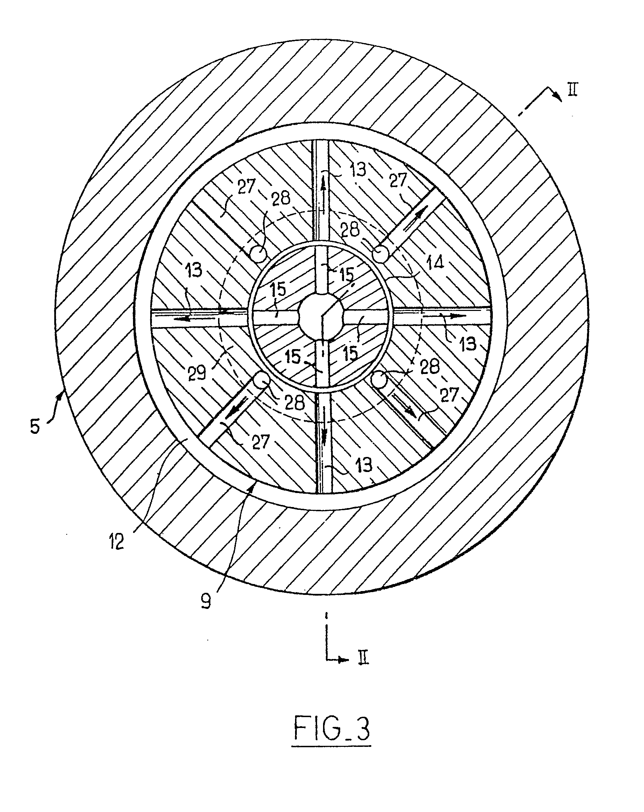

Vers son extrémité 8 voisine de la pompe, l'arbre 1 porte un disque 9 (figures 2 et 3) calé sur lui et prenant appui sur des sabots 11 de butée axiale. Ce disque est logé dans une cavité de l'enceinte 5 ménageant autour de lui un espace périphérique 12 et il est percé dans son épaisseur d'une première série de canaux radiaux 13 qui débouchent d'une part dans cet espace périphérique et d'autre part dans un évidement annulaire 14 en relation avec des canaux radiaux 15 de l'arbre 1 débouchant dans le canal axial 6 de cet arbre.

L'enceinte 5 étant remplie d'huile, on comprend que, par l'effet centrifuge dû à la rotation du disque 9, une circulation d'huile s'établit à travers le stator et les rotors, vers la gauche de la figure 1, le retour s'effectuant par le canal axial 6, et l'espace périphérique 12 constituant la zone à haute pression du circuit. Ce premier circuit d'huile est représenté par une flèche simple sur les figures 2 et 3.

Une réserve d'huile de volume variable en communication avec le moteur est logée à la partie inférieure de celui-ci entre l'enceinte 5 et une membrane souple annulaire 16, cette membrane étant en contact avec le milieu extérieur, de manière à réaliser une égalité de pression entre ce milieu extérieur et la partie de l'enceinte la plus éloignée de la pompe.

Une pièce intermédiaire 17 relie l'enceinte 5 du moteur à un corps de pompe 18. Dans cette pièce est fixée une bague d'appui 19 sur laquelle repose la partie fixe 21 a d'une garniture tournante 21 par l'intermédiaire d'un joint annulaire 22. La partie mobile 21 b de cette garniture est fixée sur l'arbre 1 par l'intermédiaire d'un joint annulaire 23 et elle est appliquée sur la partie fixe au moyen d'un ressort 24 prenant appui sur un épaulement 25 de l'arbre. Au voisinage de la garniture, la pièce 17 présente une cavité 26.

Le disque 9 comporte une seconde série de canaux radiaux 27 pratiqués dans son épaisseur et débouchant d'une part dans l'espace périphérique 12 et d'autre part dans autant de canaux longitudinaux 28 pratiqués dans un manchon 29 qui prolonge le disque vers la sortie d'arbre.

Les canaux 28 débouchent dans une cavité 31 de la pièce 17 qui communique avec la cavité 26 par des canaux 32 en barillet. D'autres canaux 33, également en barillet, font communiquer l'espace périphérique 12 avec la cavité 26. On est donc en présence d'un second circuit d'huile (représenté par une flèche double sur les figures 2 et 3), dans lequel l'huile, partant de l'espace 12 sous l'effet de la rotation du disque, atteint la cavité 26 pour passer au voisinage de la garniture 21 et revenir par les canaux 32. Un déflecteur 34 placé dans la cavité 26 oblige l'huile à passer très près du plan de coopération des deux parties de la garniture.

Ce second circuit d'huile possède en commun avec le premier l'espace périphérique 12 où l'huile des deux circuits se mélange, ce qui procure un effet de refroidissement de la garniture.

D'autre part, en raison de la perte de charge dans l'entrefer entre stators et rotors qui constitue le retour du premier circuit, la rotation du disque 9 engendre une surpression dans l'espace périphérique 12, par rapport au canal axial 6, lui-même sensiblement à la pression du milieu ambiant par le système d'équilibrage situé à la partie inférieure du moteur. Cette surpression se transmet à la cavité 26 par les canaux 33. Dans l'exemple décrit, le premier circuit est réalisé de manière qu'au voisinage de la garniture cette surpression soit de l'ordre du bar.

Sous l'effet de cette surpression, les deux parties de la garniture laissent passer un débit de fuite qui, dans ces conditions, est de l'orde du $cm^3/h$ et est automatiquement remplacé dans l'enceinte par prélèvement permanent sur la réserve ménagée à la partie inférieure du moteur.

Ce débit très faible de fluide propre permet un fonctionnement dans des conditions optimales de plusieurs milliers d'heures sans avoir à remonter la motopompe pour rechargement, eu égard au volume de la réserve.

La faiblesse du débit a encore pour avantage de n'écarter que très peu les deux parties de la garniture, de sorte que, pratiquement, elles ne cessent jamais de coopérer dans les conditions prévues.

Malgré sa faiblesse, ce débit est suffisant pour empêcher l'intrusion de toute particule solide provenant du liquide pompé et susceptible de venir au contact des faces de frottement de la garniture.

L'invention permet ainsi de réaliser un débit de fuite déterminé à l'avance et constant pendant toute la durée de la réserve d'huile.

Une pièce de protection 35 est calée sur l'arbre 1 du côté extérieur de la garniture 21 par rapport à l'enceinte 5. Cette pièce comporte un rebord périphérique 36 qui s'étend jusqu'au voisinage de l'enceinte. En outre, ce rebord épouse de près la forme de la bague d'appui 19 four former un joint labyrinthe constituant une barrière dynamique s'opposant à la pénétration éventuelle d'impuretés au contact de la garniture.

Des canaux radiaux 37 sont pratiqués dans l'enceinte 5, vis-à-vis du joint labyrinthe, pour l'évacuation de la fuite d'huile.

Le mot «huile» doit être considéré comme désignant tout liquide de lubrification et/ou de refroidissement.

## Revendications

1. Dispositif pour assurer l'étanchéité d'un moteur immergé dans un milieu extérieur, ce moteur comprenant une enceinte (5), un arbre (1) ayant une extrémité de sortie (8) s'étendant à travers une extrémité de l'enceinte (5), cet arbre (1) supportant au moins un rotor (3) adapté à coopérer avec un stator solidaire de l'enceinte (5), l'enceinte comportant une garniture tournante (21) pour l'extrémité de sortie (8) de l'arbre (1), l'enceinte étant remplie avec un liquide de lubriffication et de refroidissement sous pression et comportant des moyens étanches (16) pour maintenir la pression générale dans l'enceinte à une valeur sensiblement égale à celle du milieu extérieur, ce dispositif comportant un premier circuit (7, 6, 13, 15) créant une surpression dans une zone (12, 26) adjacente à la garniture tournante (21) caractérisé en ce qu'il comporte un second circuit (32, 28, 27) pour créer une surpression additionnelle dans cette zone (12, 26).

2. Dispositif conforme à la revendication 1 caractérisé en ce que le premier et le second circuit comprennent des moyens de pompage (13, 15, 28, 27) à effet centrifuge fixés à l'arbre (1).

3. Dispositif conforme à la revendication 1 caractérisé en ce que les moyens étanches comprennent un volume variable relié à l'enceinte (5) et comprenant une membrane souple (16) en contact avec le milieu extérieur.

4. Moteur équipé d'un dispositif conforme à l'une des revendications 1 à 3, caractérisé en ce qu'il comprend un disque de butée (9) calé sur l'arbre (1) adapté à assurer le positionnement axial de l'arbre moteur et à former le premier et le second circuit par des canaux radiaux (28, 27, 15, 13) percés dans l'épaisseur de l'arbre moteur, une première série (15, 13) de ces canaux constituant le premier circuit, faisant communiquer un canal (6) coaxial à l'arbre (1) avec un espace périphérique (12) en relation avec les deux circuits, et une seconde série (28, 27) de canaux formant le second circuit et constituant des moyens de circulation de ce second circuit.

5. Moteur conforme aux revendications 1 à 4, caractérisé en ce qu'il comporte des moyens pour que le liquide protecteur circulant dans les canaux (13) et (28, 27) assure le refroidissement du disque de butée (9) utilisé comme système de pompage.

6. Moteur conforme aux revendications 1 à 4, caractérisé en ce qu'il comporte des moyens pour que le liquide protecteur de l'espace périphérique (12) en relation avec les deux circuits soit constamment renouvelé par mélange dudit liquide avec le liquide provenant de la zone basse pression à température voisine de celle du milieu extérieur par le premier circuit (7, 6, 13, 15, 12).

7. Moteur conforme à l'une des revendications 4, 5 ou 6, caractérisé en ce qu'il comprend une pièce de protection (35) calée sur l'arbre du côté extérieur de la garniture mécanique tournante (21) par rapport à l'enceinte (5), cette pièce de protection (35) présentant un rebord périphérique (36) s'étendant au voisinage de l'enceinte pour constituer, avec cette enceinte, un joint labyrinthe à effet centrifuge.

## Patentansprüche

1. Vorrichtung zur Sicherstellung der Dichtheit eines in ein äusseres Milieu eingetauchten Motors, wobei dieser Motor ein Gehäuse (5) und eine Welle (1) mit einem endständigen, sich durch ein Gehäuseende erstreckenden Wellenausgang (8) aufweist und diese Welle (1) zumindest einen Rotor (3) trägt, der mit einem am Gehäuse (5) angeordneten Stator zusammenwirkt, wobei das Gehäuse (5) eine Drehdichtung (21) für den endständigen Wellenausgang (8) trägt, mit einer unter Druck stehenden Schmier- und Kühlflüssigkeit gefüllt ist und Dichtungsmittel (16) aufweist, um den allgemeinen Druck im Gehäuse auf einem Wert zu halten, der etwa gleich dem des Aussenmilieus ist und wobei die Vorrichtung einen ersten Kreislauf (7, 6, 13, 15) aufweist, der in einer zur Drehdichtung (21) benachbarten Zone (12, 26) einen Überdruck erzeugt, dadurch gekennzeichnet, dass sie einen zweiten Kreislauf (32, 28, 27) aufweist, um einen zusätzlichen Überdruck in dieser Zone (12, 26) zu erzeugen.

2. Vorrichtung nach Anspruch 1, dadurch gekennzeichnet, dass der erste und der zweite Kreislauf an der Welle (1) befestigte Pumpmittel (13, 15, 28, 27) mit Zentrifugalwirkung aufweisen.

3. Vorrichtung nach Anspruch 1, dadurch gekennzeichnet, dass die Dichtungsmittel ein variables Volumen aufweisen, das mit dem Gehäuse (5) in Verbindung steht und eine mit dem äusseren Milieu in Kontakt befindliche, nachgiebige Membran (16) aufweist.

4. Motor ausgerüstet mit einer Vorrichtung nach einem der Ansprüche 1 bis 3, dadurch gekennzeichnet, dass er eine auf der Welle (1) befestigte Anschlagscheibe (9) aufweist, die Axialposition der Motorwelle sichert und durch in die Motorwelle eingebohrte Radialkanäle (28, 27, 15, 13) den ersten und den zweiten Kreislauf formt, wobei eine erste Serie (15, 13) dieser Kanäle den ersten Kreislauf bildet, in dem ein koaxial zur Welle (1) verlaufender Kanal (6) mit einem äusseren Ringraum (12) zusammenwirkt, der in Beziehung mit den beiden Kreisläufen steht und wobei eine zweite Serie (28, 27) der Kanäle den zweiten Kreislauf formt und Zirkulationsmittel dieses zweiten Kreislaufes bildet.

5. Motor nach den Ansprüchen 1 bis 4, dadurch gekennzeichnet, dass er Mittel aufweist, damit die in den Kanälen (13) und (28, 27) zirkulierende Schutzflüssigkeit das Abkühlen der als Pumpsystem benutzten Anschlagscheibe (9) sicherstellt.

6. Motor nach den Ansprüchen 1 bis 4, dadurch gekennzeichnet, dass er Mittel aufweist, damit die Schutzflüssigkeit des äusseren Ringraumes (12), der mit den beiden Kreisläufen in Verbindung steht, ständig erneuert wird durch ihre Vermischung mit derjenigen Flüssigkeit, die über den ersten Kreislauf (7, 6, 13, 15, 12) aus der Niederdruckzone mit einer Temperatur nahe der des Aussenmilieus kommt.

7. Motor nach einem der Ansprüche 4, 5 oder 6, dadurch gekennzeichnet, dass er ein Schutzteil (35) aufweist, das an der Aussenseite der sich gegenüber dem Gehäuse (5) drehenden mechanischen Dichtung (21) auf der Welle befestigt ist und dass dieser Schutzteil (35) eine Aussenkrempe (36) aufweist, die sich in die Nähe des Gehäuses erstreckt, um mit diesem Gehäuse eine Labyrinthverbindung mit Zentrifugalwirkung zu bilden.

**Claims**

1. Device for ensuring leak-tightness of a motor immersed in an external medium, this motor comprising a casing (5), a shaft (1) having an emergent end (8) extending through one end of the casing (5), this shaft (1) being capable of supporting at least one rotor (3) adapted to cooperate with a stator rigidly fixed to the casing (5), the casing comprising a rotary packing-gland (21) for the emergent end (8) of the shaft (1), the casing being filled with a liquid for lubrication and cooling under pressure and comprising sealing means (16) for maintaining the general pressure within the casing at a value substantially equal to that of the external medium, this device comprising a first circuit (7, 6, 13, 15) for producing an overpressure within a zone (12, 26) adjacent to the rotary packing-gland (21), characterized in that it comprises a second circuit (32, 28, 27) for producing an additional overpressure within this zone (12, 26).

2. Device in accordance with claim 1, characterized in that the first and the second circuit comprise centrifugal-action pumping means (13, 15, 28, 27) which are fixed on the shaft (1).

3. Device in accordance with claim 1, characterized in that the sealing means comprise a variable volume connected to the casing (5) and comprising a flexible diaphragm (16) in contact with the external medium.

4. Motor equipped with a device in accordance with one of claims 1 to 3, characterized in that it comprises a thrust-bearing disk (9) keyed on the shaft (1) and adapted to ensure axial positioning of the motor shaft and to form the first and the second circuit by means of radial ducts (28, 27, 15, 13) pierced within the thickness of the motor shaft, a first series (15, 13) of these ducts being such as to constitute the first circuit for establishing a communication between a duct (6) which is coaxial with the shaft (1) and a peripheral space (12) which is in relation with the two circuits, and a second series (28, 27) of ducts forming the second circuit and constituting circulation means of this second circuit.

5. Motor in accordance with claims 1 to 4, characterized in that it comprises means whereby the protective liquid which circulates within the ducts (13) and (28, 27) ensures cooling of the thrust-bearing disk (9) which is used as a pumping system.

6. Motor in accordance with claims 1 to 4, characterized in that it comprises means whereby the protective liquid of the peripheral space (12) which is in relation with the two circuits is continuously renewed by mixing of said liquid with the liquid supplied from the low-pressure zone at a temperature in the vicinity of the temperature of the external medium by the first circuit (7, 6, 13, 15, 12).

7. Motor in accordance with one of claims 4, 5 or 6, characterized in that it comprises a protection member (35) keyed on the shaft on the external side of the rotary mechanical packing-gland (21) with respect to the casing (5), this protection member (35) being provided with a peripheral flange (36) which extends to the vicinity of the casing in order to constitute with this casing a labyrinth seal having a centrifugal action.

FIG_1

FIG_2

0 097 549

FIG_3